# EUROPÄISCHE PATENTSCHRIFT

(11) **EP 1 062 420 B1**
(45) Veröffentlichungstag und Bekanntmachung des Hinweises auf die Patenterteilung: **09.02.2005**
(21) Anmeldenummer: 99960809.4
(22) Anmeldetag: 26.10.1999
(51) Int. Cl.: F02M 25/08, F16K 31/06

(54) **VENTIL ZUM DOSIERTEN EINLEITEN VON VERFLÜCHTIGTEM BRENNSTOFF**
VALVE FOR DOSING THE ADMISSION OF VOLATILIZED FUEL
VANNE POUR L'ADMISSION DOSEE D'UN CARBURANT VOLATIL

(30) Priorität: 14.01.1999 DE 19901090
(43) Veröffentlichungstag der Anmeldung: 27.12.2000
(73) Patentinhaber: ROBERT BOSCH GMBH, 70442 Stuttgart (DE)
(72) Erfinder: KRIMMER, Erwin, D-73655 Plüderhausen (DE); SCHULZ, Wolfgang, D-74321 Bietigheim-Bissingen (DE); MIEHLE, Tilman, D-71394 Kernen (DE)
(86) Internationale Anmeldenummer: PCT/DE1999/003393
(87) Internationale Veröffentlichungsnummer: WO 2000/042312

(56) Entgegenhaltungen:
- WO-A-99/42752
- DE-A- 4 244 113
- DE-A- 4 329 396
- DE-A- 19 721 562
- DE-A- 19 840 250
- DE-C- 4 229 110
- US-A- 5 083 546
- US-A- 5 289 811

## Beschreibung

### Stand der Technik

Die Erfindung betrifft ein Ventil zum dosierten Einleiten von aus einem Brennstofftank einer Brennkraftmaschine verflüchtigtem Brennstoff in die Brennkraftmaschine nach der Gattung des Anspruchs 1.

Solche Ventile gehen beispielsweise aus der DE 40 23 044 A1 sowie aus der DE 195 16 545 A1 hervor, sie dienen der Regenerierung von Adsorptionsfiltern für Brennstoffverdunstungs-Rückhaltesysteme des Brennstofftanks von Fahrzeugen. Diese Magnetventile weisen einen hohlzylindrischen Magnetkern auf, der mit einem das Rückschlußjoch des Elektromagneten bildenden, das Magnetgehäuse überdeckenden und randseitig an einem Ringsteg anliegenden Ventilsitzkörper verbunden ist. In dem Ventilsitzkörper sind Ringschlitze angeordnet, welche einen Öffnungsquerschnitt definierter Größe bilden.

Aufgrund dieser konstruktiven Ausbildung kann bei einem vorgegebenen Hub des Ventilglieds ein vorgebbares Volumen an Kraftstoffdämpfen abgesaugt werden. Dieses Volumen ist durch den maximal möglichen Öffnungsquerschnitt des hohlzylinderförmigen Magnetkerns und der Öffnungsschlitze in dem Ventilsitz begrenzt. Geringfügige Toleranzen können durch Axialverstellung des Magnetkerns ausgeglichen werden. Aufgrund ihres Aufbaus sind solche Ventile nicht für große Durchflußmengen geeignet, insbesondere ist ein Einsatz bei benzindirekteinspritzenden Brennkraftmaschinen problematisch.

Aus der DE 42 29 110 C1 geht eine Vorrichtung zum vorübergehenden Speichern und dosierten Einspeisen von im Freiraum einer Tankanlage befindlichen flüchtigen Kraftstoffbestandteil in das Ansaugrohr einer Verbrennungskraftmaschine hervor, bei der die Speicherkammer mit dem Ansaugrohr durch eine Leitung verbunden ist, die durch ein elektromagnetisch betätigbares Ventil verschließbar ist. Das Ventil weist eine Einlaß- und eine Auslaßöffnung auf, wobei zwischen der Einlaß- und der Auslaßöffnung zumindest ein Ventilsitz vorgesehen ist, der durch ein Schließglied verschließbar ist. Der Ventilsitz bildet die axiale Begrenzung einer rohrförmigen Düse. Diese Düse weist im Bereich des Ventilsitzes einen ersten Öffnungsquerschnitt auf, der sich in Strömungsrichtung unmittelbar hinter dem Ventilsitz auf einen zweiten Öffnungsquerschnitt verjüngt. Der zweite Öffnungsquerschnitt ist auf der dem Ventilsitz abgewandten Seite im Bereich des axialen Abschlusses der Düse auf einen dritten Öffnungsquerschnitt erweitert, der größer ist als der erste Öffnungsquerschnitt.

Die Fläche des ersten Öffnungsquerschnitts ist bei dieser Vorrichtung 1,01 bis 2,5 mal größer als die Fläche des zweiten Öffnungsquerschnitts. Aufgrund dieser Größenverhältnisse ist zur Förderung einer bestimmten vorgegebenen Menge ein recht großer Ventilhub erforderlich, der zu großen Öffnungs- und Schließzeiten führt. Darüber hinaus verursacht ein derartiger großer Hub eine nicht unerhebliche Geräuschkulisse beim Öffnen und Schließen des Ventils.

Aus der DE 197 21 562 A ist ein Magnetventil gemäß dem Oberbegriff des Anspruchs 1 bekannt.

Aufgabe der Erfindung ist es, ein Ventil der gattungsgemäßen Art derart weiterzubilden, daß es bei großen Durchflußmengen möglichst schmutzunempfindlich und möglichst geräuschfrei arbeitet, daß es darüber hinaus kostengünstig herstellbar ist und insbesondere auch bei benzindirekteinspritzenden Brennkraftmaschinen einsetzbar ist.

### Vorteile der Erfindung

Diese Aufgabe wird bei einem Ventil zum dosierten Einleiten von aus einem Brennstofftank einer Brennkraftmaschine verflüchtigtem Brennstoff in die Brennkraftmaschine der eingangs beschriebenen Art durch die Merkmale des Anspruchs 1 gelöst. Dadurch, daß stromabwärts des Ventilglieds ein die Strömung eines Gases beeinflussendes Strömungselement angeordnet ist, dessen Gestalt auf den Querschnitt eines an einem Gehäuseteil des Magnetventils angeordneten, mit einem Sitzelement des Ventilglieds zusammenwirkenden Dichtsitz derart angepaßt ist, daß die Fläche des Öffnungsquerschnittes des Dichtsitzes größer als 2,5 mal, vorzugsweise 9 mal größer ist als die Fläche des wirksamen Öffnungsquerschnitts des Strömungselements, können durch Ausbildung des Strömungselements und des Dichtsitzes bei einem vorgegebenen Hub des Ventilglieds Öffnungsquerschnitte in weiten Grenzen durch Anpassung des Öffnungsquerschnitts und der Gestalt des Strömungselements auf den Öffnungsquerschnitt des Dichtsitzes eingestellt werden. Durch die oben angegebenen Größenverhältnisse wird insbesondere auf besonders vorteilhafte Weise ein kleiner Ventilhub und damit kurze Öffnungs- und Schließzeiten und eine geringe Geräuschkulisse ermöglicht.

Das Strömungselement kann auf die unterschiedlichste Art und Weise gestaltet sein. Bei einer vorteilhaften Ausführungsform ist vorgesehen, daß das Strömungselement eine Drossel ist, deren Querschnitt kleiner ist als der Querschnitt des Dichtsitzes.

Das Strömungselement kann darüber hinaus auch eine Blende sein, deren Durchmesser kleiner ist als der Querschnitt des Dichtsitzes.

Eine andere vorteilhafte Ausführungsform sieht eine Lavaldüse, deren Strömungsquerschnitt ebenfalls kleiner ist als der Strömungsquerschnitt des Dichtsitzes als Strömungselement vor. Durch eine derartige Lavaldüse kann insbesondere ein besonders vorteilhaftes Strömungsprofil erzeugt werden.

Das Sitzelement ist vorzugsweise eine an dem Ventilglied angeordnete, einen Teil des Rückschlußjoches bildende Ankerplatte, an der vorteilhafterweise elastische Dichtungs- und/oder Geräuschdämpfungselement angeordnet sind.

Bei einer besonders vorteilhaften Ausführungsform ist dabei vorgesehen, daß im Bereich des Dichtsitzes die Ankerplatte durchragende elastische Dämpfungselemente angeordnet sind, die auf der dem Dichtsitz zugewandten Seite eine Dichtungsfunktion und auf der dem Elektromagneten zugewandten Seite eine Dämpfungsfunktion aufweisen. Auf diese Weise lassen sich eine Dichtungs- mit einer Dämpfungsfunktion kombinieren und hierdurch insbesondere auch der Montageaufwand für die Dichtungs- und Dämpfungselemente und infolge davon die Herstellungskosten reduzieren.

Eine andere insbesondere hinsichtlich der Geräuschreduzierung besonders vorteilhafte Ausführungsform sieht vor, daß das Sitzelement eine zwei Teile umfassende Ankerplatte ist, die derart aufeinander ausgebildet, miteinander verbunden und mit einem Dichtungs- und/oder Geräuschdämpfungselement versehen sind, daß im Bereich des Dichtsitzes unter dem Dichtungs- und/oder Geräuschdämpfungselement ein Hohlraum ausgebildet ist. Durch diesen Hohlraum wird der Aufprall der Ankerplatte auf dem Dichtsitz zur Geräuschreduzierung abgefedert.

Das Auftreffen der von dem Elektromagneten angezogenen Ankerplatte auf eine Polplatte des Elektromagneten wird vorteilhafterweise durch Dichtungs- und/oder Dämpfungselemente abgefedert, die eine Mehrzahl von die Ankerplatte durchragenden und hohlgeformten Gumminoppen aufweisen, die beim Öffnen des Ventils, d.h. beim Anziehen der Ankerplatte durch den Elektromagneten auf die Polplatte des Elektromagneten auftreffen.

Bei einer besonders vorteilhaften Ausführungsform der Erfindung ist vorgesehen, daß die Ankerplatte eine Druckausgleichsöffnung aufweist, die einen auf einer Seite der Ankerplatte ausgebildeten dichtsitzseitigen Hohlraum mit einem auf der anderen Seite der Ankerplatte ausgebildeten, dem Elektromagneten zugewandten Hohlraum des Ventils (elektromagnetseitiger Hohlraum) verbindet. Hierdurch werden auf besonders vorteilhafte Weise hohe Schaltfrequenzen auch bei einem Ventil mit einem Dichtsitz mit besonders großem Querschnitt ermöglicht. Bei Ventilen mit großem Dichtsitz ist nämlich der dort anstehende Differenzdruck problematisch, da er eine sehr hohe Magnetkraft erfordert, um ein schnelles Schalten des Ventils zu ermöglichen. Da nun der Differenzdruck bei Betrieb des Ventils von der Motorlast des Kraftfahrzeugs abhängig ist, können sich so bei gleichbleibender Magnetkraft unterschiedliche Anzugs- und Schließzeiten ergeben. Durch eine einen Druckausgleich ermöglichende Ankerplatte mit einer Druckausgleichsöffnung zwischen einem elektromagnetseitigen Hohlraum und einem dichtsitzseitigen Hohlraum wird auf einfache Weise ein Druckausgleich ermöglicht.

Der auf der dem Elektromagneten zugewandten Seite der Ankerplatte ausgebildete Hohlraum ist dabei durch ein elastisches Dichtungs- und Dämpfungselement gegenüber der Umgebung dicht verschlossen, das an dem Magnetanker auf seiner der Ankerplatte zugewandten Seite befestigt ist und zusammen mit dem Magnetanker eine Hubbewegung ausführt.

Das Dichtungs- und Dämpfungselement durchragt dabei die Ankerplatte und übt so vorteilhafterweise auch auf seiner dem Dichtsitz zugewandten Seite eine Dichtungs- und Dämpfungsfunktion aus.

Um auszuschließen, daß beim Betrieb des Ventils Schmutzpartikel und dergleichen ins Innere des Ventils gelangen, sieht eine vorteilhafte Ausführungsform vor, daß eine die Ankerplatte konzentrisch umgebende, im Gehäuse fest angeordnete Schmutzfängereinrichtung vorgesehen ist, die in Öffnungsrichtung des Ventils Schmutzpartikel vorgebbarer Größe zurückhält. Diese Schmutzfängereinrichtung ist vorzugsweise kreisringförmig ausgebildet und weist versetzt zueinander angeordnete, in Axialrichtung vorstehende, vorzugsweise zylinderförmige Stifte auf. Die Stifte sind dabei so benachbart zueinander angeordnet, daß Schmutzpartikel vorgebbarer Größe von ihnen zurückgehalten werden.

### Zeichnung

Weitere Vorteile und Merkmale der Erfindung sind Gegenstand der nachfolgenden Beschreibung sowie der zeichnerischen Darstellung der Ausführungsbeispiele.

In der Zeichnung zeigen:
- Fig. 1: schematisch einen Schnitt entlang der Linie I-I in Fig. 3 durch ein erfindungsgemäßes Ventil;
- Fig. 2: eine in Fig. 1 mit II bezeichnete Ausschnittvergrößerung;
- Fig. 3: die Draufsicht auf ein Magnetgehäuse des in Fig. 1 dargestellten Ventils;
- Fig. 4: die Unteransicht eines Deckelelements des in Fig. 1 dargestellten Ventils;
- Fig. 5: eine der Fig. 2 entsprechende Ausschnittvergrößerung einer anderen Ausführungsform des erfindungsgemäßen Ventils;
- Fig. 6: schematisch eine Schnittdarstellung einer anderen Ausführungsform eines erfindungsgemäßen Ventils;
- Fig. 7: eine in Fig. 6 mit VII bezeichnete Ausschnittvergrößerung;
- Fig. 8: eine in Fig. 6 mit VIII bezeichnete Ausschnittvergrößerung und
- Fig. 9: eine perspektivische Darstellung einer bei dem in Fig. 6 dargestellten Ventil verwendeten Ankerscheibe.

### Beschreibung der Ausführungsbeispiele

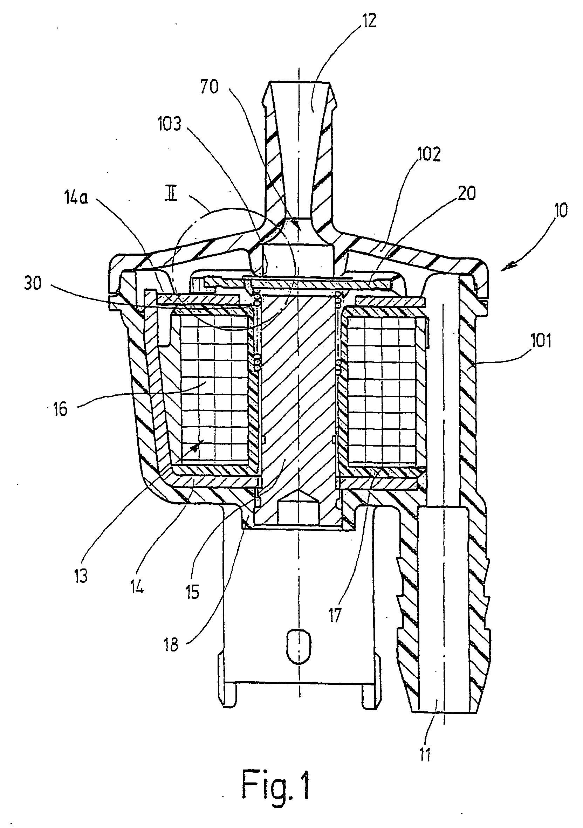

Ein in Fig. 1 im Längsschnitt dargestelltes Tankentlüftungsventil als Ausführungbeispiel für ein beliebiges Magnetventil, dient zum dosierten Zumischen von aus dem Brennstofftank einer (nicht dargestellten) gemischverdichtenden fremdgezündeten Brennkraftmaschine verflüchtigtem Brennstoff in die Brennkraftmaschine, z.B. in ein Ansaugrohr oder bei einer Benzindirekteinspritzung direkt in einen Zylinder der Brennkraftmaschine und ist Teil eines nicht näher dargestellten Brennstoffverdunstungs-Rückhaltesystems einer Brennkraftmaschine. Der Aufbau und die Funktion derartiger Brennstoffverdungstungs-Rückhaltesysteme ist beispielsweise der "Bosch Technische Unterrichtung Motormanagement Motronic", 2. Ausgabe, August 1993, Seiten 48 und 49 entnehmbar. Ein Tankentlüftungsventil und dessen Funktion geht beispielsweise aus der DE 40 23 044 A1 sowie aus der DE 195 16 545 A1, auf die vorliegend Bezug genommen wird, hervor.

Das Tankentlüftungsventil weist ein zweiteiliges Ventilgehäuse 10 mit einem topfförmigen Gehäuseteil 101 und einem diesen abschließenden, kappenförmigen Gehäuseteil 102 auf. Der Gehäuseteil 101 trägt einen Zuströmstutzen 11 zum Anschließen an einen Entlüftungsstutzen des Brennstofftanks oder an einen diesem nachgeschalteten, mit Aktivkohle gefüllten Speicher für den verflüchtigten Brennstoff. Der Gehäuseteil 102 trägt einen Abströmstutzen 12 zum Anschließen an das Ansaugrohr der Brennkraftmaschine. Der Zuströmstutzen 11 und der Abströmstutzen 12 sind jeweils in den Gehäuseteilen 101, 102 in Axialrichtung angeordnet. Im Inneren des topfförmigen Gehäuseteils 101 ist ein Elektromagnet 13 angeordnet. Der Elektromagnet 13 weist ein topfförmiges Magnetgehäuse 14 mit einem den Topfboden durchdringenden, zur Ventilachse koaxialen, zylindrischen Magnetkern 15 und mit einer zylindrischen Erregerspule 16 auf, die auf einem Spulenträger 17 sitzt, der im Magnetgehäuse 14 den Magnetkern 15 umschließt. Am Boden des Magnetgehäuses 14 ist ein nach außen vorspringender Gewindestutzen 18 mit einem Innengewinde ausgebildet, das mit einem Außengewindeabschnitt des hohlzylindrischen Magnetkerns 15 verschraubt ist. Der Magnetkern 15 kann damit durch Drehen im Magnetgehäuse 14 zu Justierzwecken axial verschoben werden. Dabei kann vorgesehen sein, daß der Magnetkern 15 mit einem selbstschneidenden Gewinde versehen ist, welches beispielsweise bei der Montage in den Gewindestutzen 18 geschnitten wird.

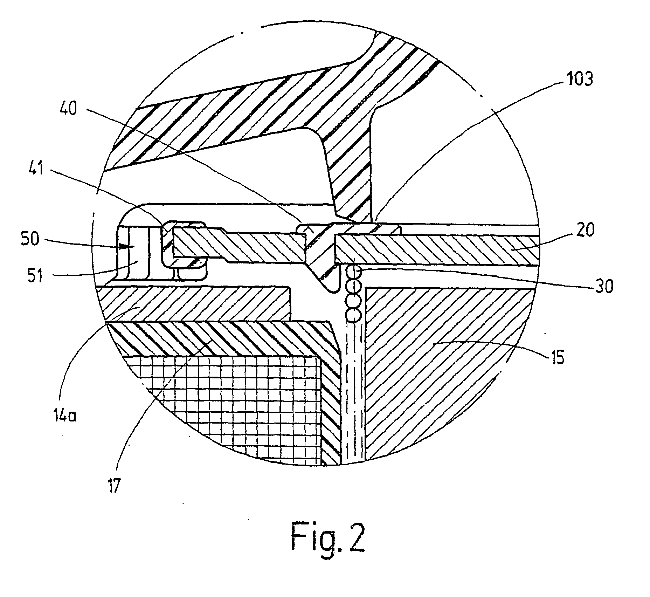

Auf seiner dem Abströmstutzen 12 zugewandten Seite ist eine entgegen der Rückstellkraft einer Rückstellfeder 30 vorgespannte Ankerplatte 20 vorgesehen, die von dem Elektromagneten 13 angezogen wird und ein Ventilglied bildet, das an einem an dem Gehäuse 102 direkt oder indirekt angeordneten Dichtsitz 103 zur Anlage kommt. Wie insbesondere aus Fig. 2 hervorgeht, ist im Bereich des Dichtsitzes 103 ein elastomeres Dichtungs- und Dämpfungselement 40 angeordnet. Die Ankerplatte 20 weist ferner randseitig ein weiteres Dämpfungselement 41 auf. Die Dämpfungselemente 40 bzw. 41 dienen zum einen einer Geräuschdämpfung beim Aufprall der Ankerplatte 20 auf die in diesem Bereich angeordnete Polplatte 14a des Magnetgehäuses 14, zum anderen dient das Dichtungs- und Dämpfungselement 40 auch als Dichtungselement am Ventilsitz 103.

Wie insbesondere aus Fig. 1 hervorgeht, weist der Abströmstutzen 12 ein Strömungselement 70 in Form einer Lavaldüse auf. Es versteht sich jedoch, daß das Strömungselement nicht auf eine Lavaldüse beschränkt ist und auch als Blende oder als Drossel ausgebildet sein kann. Das Strömungselement 70 ist so ausgebildet, daß die Fläche seines engsten Strömungsquerschnitts kleiner ist als die Fläche des Öffnungsquerschnitts des Dichtsitzes 103. Dieser Öffnungsquerschnitt des Dichtsitzes 103 hat eine zylinderförmige Gestalt, dessen Zylinderdurchmesser durch den Durchmesser des Dichtsitzes 103 und dessen Höhe durch den Abstand der Ankerplatte 20 von dem Dichtsitz 103 bei angezogener Ankerplatte 20 bestimmt werden. Der zylinderförmige Öffnungsquerschnitt kann durch axiales Einstellen des Magnetkerns 15 festgelegt werden. Die Durchflußmenge durch das Ventil wird durch die Fläche des Querschnitts des Strömungselements 70, bei der gezeigten Ausführungsform durch den Querschnitt der Lavaldüse, der kleiner ist als die Fläche des Querschnitts des Dichtsitzes 103, bestimmt. Die Fläche des Querschnitts des Dichtsitzes 103 ist dabei etwa 9 mal größer als die Fläche des wirksamen Querschnitts des Strömungselements, der bei der Lavaldüse durch deren kleinsten Querschnitt bestimmt ist. Durch diese Größenverhältnisse wird ein kleiner Ventilhub und damit kurze Öffnungs- und Schließzeiten und eine geringe Geräuschentwicklung beim Öffnen und Schließen des Ventilglieds ermöglicht.

Abhängig von der Auslegung des Dichtsitzes 103 kann der Arbeitsluftspalt des Magnetventils variiert werden. Die Ventilschließzeiten können durch den einstellbaren Magnetkern 15 zum Ausgleich von Bauteiletoleranzen variiert und eingestellt werden.

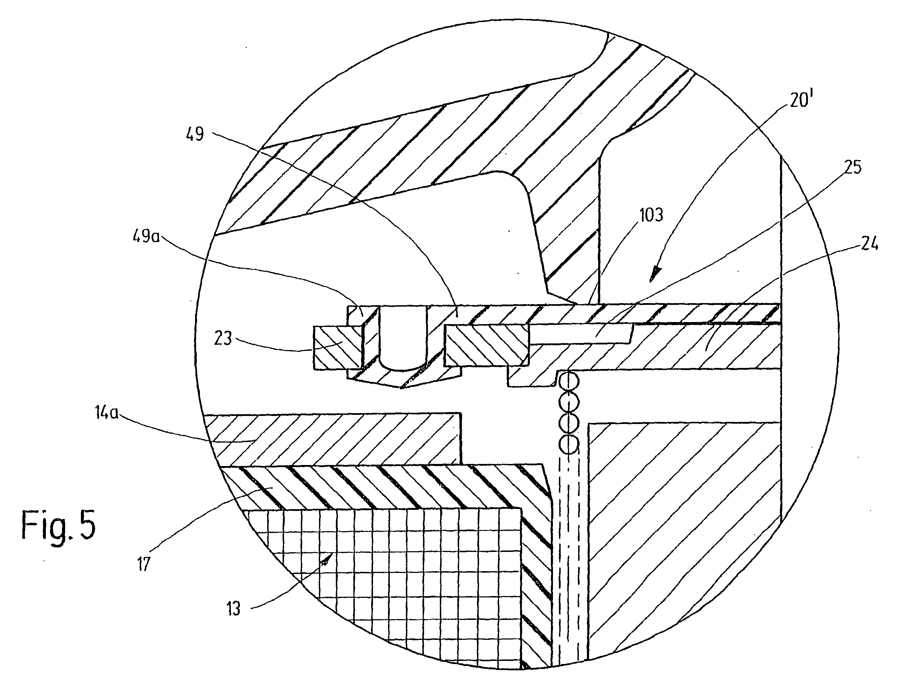

Zur weiteren Geräuschreduzierung kann die Ankerplatte 20' gemäß Fig. 5 aus zwei miteinander verbundenen Bauteilen 23, 24 zusammengesetzt sein, die mit einem Dichtungs- und Geräuschdämpfungselement 49 versehen sind, derart, daß im Bereich des Dichtsitzes 103 zwischen diesen drei Teilen 23, 24 49 ein Hohlraum 25 ausgebildet und zum Dichtsitz 103 hin durch das Dichtungs- und Geräuschdämpfungselement 49 abgedeckt ist. Durch den Hohlraum 25 kann der Aufprall der Ankerplatte 20' auf den Dichtsitz 103 zur Geräuschreduzierung abgefedert werden. Ein Aufprall der Ankerplatte 20' auf die Polplatte 14a wird durch hohlgeformte Noppen 49a aus elastomerem Material, beispielsweise Gumminoppen abgefedert. Die Ankerplatte 20, 20' läuft bei dieser Ausbildung zwischen festen Anschlägen (Dichtsitz 103 und Polplatte 14a). Der Magnetkern 15 kann dabei zur Einstellung der Anzugszeit auf einen bestimmten Arbeitsluftspalt so eingestellt werden, daß zwischen Ankerplatte 20, 20' und Magnetkern 15 ein Restluftspalt vorhanden bleibt, um einen mechanischen Aufprall der Ankerplatte 20, 20' auf den Magnetkern 15 zu vermeiden. Eine Verdrehsicherung des Magnetkerns 15 wird durch ein selbstschneidendes Gewinde erzielt, welches bei der Montage zusätzlich in den Spulenkörper 17 geschnitten wird.

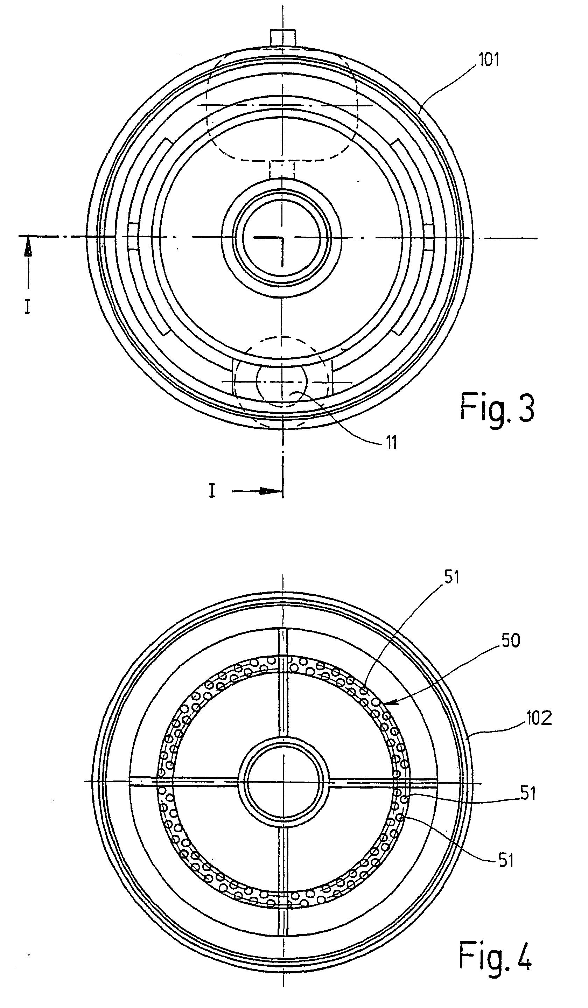

Wie insbesondere aus Fig. 2 und Fig. 4 hervorgeht, ist darüber hinaus eine die Ankerplatte 20 umgebende, gehäusefest angeordnete Schmutzfängereinrichtung 50 vorgesehen, die Schmutzpartikel vorgebbarer Größe zurückhält. Die Schmutzfängereinrichtung 50 ist zwischen den beiden Gehäuseteilen 101 und 102 durch Pressung gehalten, sie weist versetzt zueinander angeordnete in Axialrichtung vorstehende, vorzugsweise zylindrische Schmutzfängerstifte 51 auf, an denen sich Partikel vorgebbarer Größe verfangen und dadurch bei einem Absaugvorgang von einem Eindringen in das Innere des Ventils zurückgehalten werden.

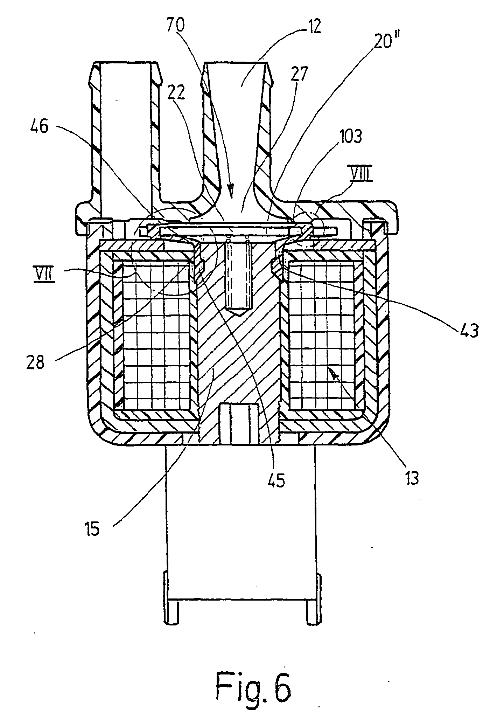

Bei einem zweiten in Fig. 6 bis Fig. 8 dargestellten Ausführungsbeispiel sind diejenigen Elemente, die mit denen des ersten, in Fig. 1 bis Fig. 5 dargestellten Ausführungsbeispieles identisch sind, mit denselben Bezugszeichen versehen, so daß bezüglich deren Beschreibung auf die obigen Ausführungen voll inhaltlich Bezug genommen wird.

Im Gegensatz zu dem in Verbindung mit Fig. 1 bis Fig. 5 beschriebenen ersten Ausführungsbeispiel weist das in Fig. 5 bis Fig. 8 dargestellte zweite Ausführungsbeispiel eine Ankerplatte 20" mit einer zentral angeordneten Druckausgleichsöffnung 22 auf, die einen dichtsitzseitigen Hohlraum 27 mit einem auf der dem Elektromagneten zugewandten Seite der Ankerplatte 20" angeordneten Hohlraum (elektromagnetseitiger Hohlraum) 28 verbindet. Der dichtsitzseitige Hohlraum 27 ist mit dem Abströmstutzen 12 verbunden. Der elektromagnetseitige Hohlraum 28 ist durch ein an der Ankerplatte 20" befestigtes Dichtungs- und Dämpfungselement 43 gegenüber der Umgebung dicht verschlossen. Das Dichtungs- und Dämpfungselement 43 durchragt die Ankerplatte 20" an fünf vorzugsweise um gleiche Winkel versetzten Stellen 44. Das Dichtungs- und Dämpfungselement 43 wird an der Ankerplatte 20" durch Aufvulkanisieren dicht montiert, wobei an der dem Magnetkern 15 zugewandten Seite der Ankerplatte 20" vor dem Aufvulkanisieren des aus einem Elastomer bestehenden Dichtungs- und Dämpfungselements 43 ein Trennmittel aufgebracht wird, damit das Dichtungs- und Dämpfungselement 43 in diesem Bereich nicht aufvulkanisiert, sondern beweglich bleibt.

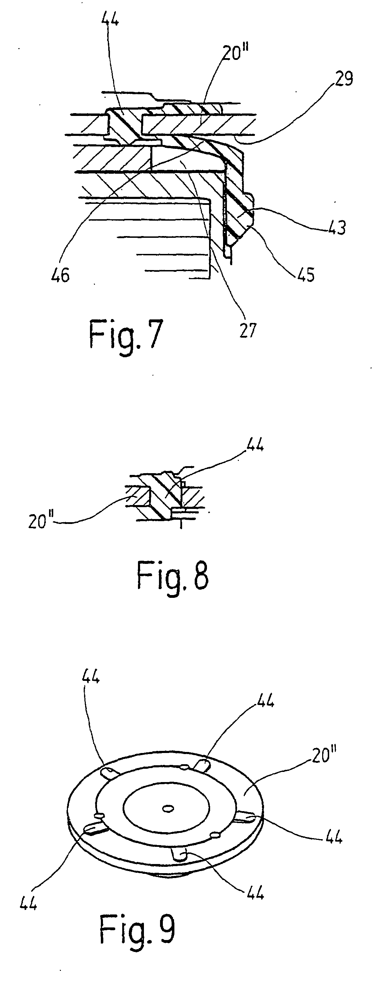

Wie aus Fig. 6 und insbesondere aus Fig. 7 hervorgeht, weist das Dichtungs- und Dämpfungselement 43 einen radial einwärts angeordneten Vorsprung 45 auf, der in eine zu ihm komplementär ausgebildete Ausnehmung des Magnetkerns 15 hineinragt und an dem Magnetkern 15 befestigt ist. Bei einer Bewegung der Ankerplatte 20" wird durch Axialbewegung eines elastischen Bereichs 46 des Dichtungs- und Dämpfungselements 43 sichergestellt, daß der dem Magnetkern 15 zugewandte Hohlraum 28 gegenüber der Umgebung abgedichtet ist. Durch die Druckausgleichsöffnung 22 und das Dichtelement 43 ist sichergestellt, daß der magnetkernseitige Hohlraum 28 mit dem dichtsitzseitigen Hohlraum 27 und damit mit dem Abströmstutzen 12 druckausgeglichen verbunden ist. Durch diesen Druckausgleich muß beim Anziehen der Ankerplatte 20" lediglich noch die Rückstellkraft der Rückstellfeder 30 und eine geringe, eventuell auf einen Teil des Dichtelements 43 wirkende Druckkraft überwunden werden, nicht jedoch ein Differenzdruck, der zwischen dem elektromagnetseitigen Hohlraum 28 und dem ventilsitzseitigen Hohlraum 27 entstehen und auf die beiderseitigen Flächen der Ankerplatte 20" wirken würde, wenn keine Ausgleichsöffnung 22 vorhanden wäre. Ein solcher Differenzdruck entsteht beim Betrieb des Ventils, er ist abhängig von der Motorlast. Bei einem hohen Differenzdruck müßte ohne die oben beschriebene Ausgleichsbohrung 22 in der Ankerplatte 20" eine hohe Magnetkraft aufgebracht werden.

Durch die beschriebene Ausbildung der Ankerplatte 20" mit der Ausgleichsöffnung 22 ist die an dem Elektromagneten aufzubringende Kraft zum Anziehen der Ankerplatte 20" wesentlich unabhängiger vom Differenzdruck. Auf diese Weise kann der Elektromagnet kleiner ausgelegt werden. Die Ventilanzugs- bzw. -schließzeit wird nahezu unabhängig von den unterschiedlichen Differenzdrücken des Motors. Hierdurch erhöht sich die Genauigkeit der Zumessung des Regeneriergases über den gesamten Druckbereich.

## Patentansprüche

1. Magnetventil, insbesondere zur Tankentlüftung bei Kraftfahrzeugen mit wenigstens einer einen Dichtsitz (103) bildenden Ventilöffnung und mit einem zur Freigabe und zum Verschließen des wenigstens einen Dichtsitzes (103) mit diesem zusammenwirkenden, federbelasteten von einem Elektromagneten entgegen der Rückstellkraft einer Rückstellfeder (30) betätigten Ventilglied (20, 20', 20"), wobei stromabwärts des Ventilglieds ein die Strömung eines Gases drosselndes Strömungselement (70) angeordnet ist, **dadurch gekennzeichnet, daß** dessen Gestalt an den Öffnungsquerschnitt des mit dem Ventilglied (20, 20', 20") zusammenwirkenden Dichtsitzes (103) zur Bestimmung (Zumessung) der Durchflußmenge des Gases durch den Querschnitt des Strömungselementes (70) bei geöffnetem Magnetventil derart angepaßt ist, daß die Fläche des Öffnungsquerschnitts des wirksamen Dichtsitzes (103) größer als 2,5 mal, vorzugsweise größer als 9 mal größer ist als die Fläche des wirksamen Querschnitts des Strömungselements (70).

2. Ventil nach Anspruch 1, **dadurch gekennzeichnet, daß** das Strömungselement (70) eine Drossel ist, deren Querschnitt kleiner ist als der Öffnungsquerschnitt des Dichtsitzes (103).

3. Ventil nach Anspruch 1, **dadurch gekennzeichnet, daß** das Strömungselement (70) eine Blende ist, deren Durchmesser kleiner ist als der Öffnungsquerschnitt des Dichtsitzes (103).

4. Ventil nach Anspruch 1, **dadurch gekennzeichnet, daß** das Strömungselement (70) eine Lavaldüse ist, deren Querschnitt kleiner ist als der Öffnungsquerschnitt des Dichtsitzes (103).

5. Ventil nach einem der Ansprüche 1 bis 4, **dadurch gekennzeichnet, daß** das Ventilglied eine einen Teil des Rückschlußjochs bildende Ankerplatte (20, 20', 20") ist.

6. Ventil nach Anspruch 5, **dadurch gekennzeichnet, daß** an der Ankerplatte (20) elastische Dicht- und/oder Geräuschdämpfungselemente (40, 41, 43) angeordnet sind.

7. Ventil nach Anspruch 6, **dadurch gekennzeichnet, daß** im Bereich des Dichtsitzes (103) die Ankerplatte (20) durchragende, elastische Dämpfungselemente (40) angeordnet sind, die auf der dem Dichtsitz (103) zugewandten Seite eine Dichtungsfunktion und auf der dem Elektromagneten (13) zugewandten Seite eine Dämpfungsfunktion aufweisen.

8. Ventil nach einem der Ansprüche 1 bis 4, **dadurch gekennzeichnet, daß** das Ventilglied eine zwei Teile (23, 24) umfassende Ankerplatte (20') ist, wobei die beiden Teile (23, 24) derart aufeinander ausgebildet, miteinander verbunden und mit einem Dichtungs- und/oder Geräuschdämpfungselement (49) versehen sind, das im Bereich des Dichtsitzes (103) unter dem Dichtungs- und/oder Geräuschdämpfungselement (49) ein Hohlraum (25) ausgebildet ist.

9. Ventil nach Anspruch 8, **dadurch gekennzeichnet, daß** das Dichtungs- und/oder Dämpfungselement eine Mehrzahl von wenigstens einen der beiden Teile (23) der Ankerplatte (20) durchragende und hohlgeformte Gumminoppen (49a) aufweist, die beim Öffnen des Ventils auf eine Polplatte (14a) des Elektromagneten auftreffen.

10. Ventil nach einem der Ansprüche 5 bis 7, **dadurch gekennzeichnet, daß** die Ankerplatte (20") eine Druckausgleichsöffnung (22) aufweist, die einen auf einer Seite der Ankerplatte ausgebildeten dichtsitzseitigen Hohlraum (27) mit einem auf der anderen Seite der Ankerplatte (20") ausgebildeten, dem Elektromagneten (13) zugewandten Hohlraum (elektromagnetseitigen Hohlraum) (28) des Ventils verbindet.

11. Ventil nach Anspruch 10, **dadurch gekennzeichnet, daß** der elektromagnetseitige Hohlraum (28) durch ein elastisches Dicht- und Dämpfungselement (43) begrenzt wird, das an dem Magnetkern auf seiner der Ankerplatte (20") zugewandten Seite befestigt ist und durch eine Hubbewegung der Ankerplatte (20") deformierbar ist.

12. Ventil nach Anspruch 11, **dadurch gekennzeichnet, daß** das Dicht- und Dämpfungselement (43) die Ankerplatte (20") durchragt und auch auf seiner dem Dichtsitz (103) zugewandten Seite eine Dicht- und Dämpfungsfunktion aufweist.

13. Ventil nach einem der Ansprüche 1 bis 12, **dadurch gekennzeichnet, daß** eine die Ankerplatte (20; 20', 20") konzentrisch umgebende, gehäusefest angeordnete Schmutzfängereinrichtung (50) vorgesehen ist, die Schmutzpartikel vorgebbarer Größe zurückhält.

14. Ventil nach Anspruch 13, **dadurch gekennzeichnet, daß** die Schmutzfängereinrichtung (50) kreisringsförmig ausgebildet ist und versetzt zueinander angeordnete, in Axialrichtung vorstehende, vorzugsweise zylinderförmige Schmutzfängerstifte (51) aufweist.

## Claims

1. Solenoid valve, in particular for venting a fuel tank in motor vehicles, having at least one valve opening forming a sealing seat (103) and having a spring-loaded valve element (20, 20', 20") which interacts with the at least one sealing seal (103) in order to open and to close it and is actuated counter to the restoring force of a restoring spring (30) by an electromagnet, a flow element (70) which constricts the flow of a gas being arranged downstream of the valve element, **characterized in that** the shape of the flow element is matched in such a manner to the opening cross section of the sealing seat (103), which interacts with the valve element (20, 20', 20''), in order to determine (proportion) the flow quantity of the gas through the cross section of the flow element (70) when the solenoid valve is open such that the area of the opening cross section of the effective sealing seat (103) is greater than 2.5 times, preferably greater than 9 times greater than the area of the effective cross section of the flow element (70).

2. Valve according to Claim 1, **characterized in that** the flow element (70) is a restrictor, the cross section of which is smaller than the opening cross section of the sealing seat (103).

3. Valve according to Claim 1, **characterized in that** the flow element (70) is an aperture, the diameter of which is smaller than the opening cross section of the sealing seat (103).

4. Valve according to Claim 1, **characterized in that** the flow element (70) is a Laval nozzle, the cross section of which is smaller than the opening cross section of the sealing seat (103).

5. Valve according to one of Claims 1 to 4, **characterized in that** the valve element is an armature plate (20, 20', 20") forming part of the return yoke.

6. Valve according to Claim 5, **characterized in that** elastic sealing and/or noise-damping elements (40, 41, 43) are arranged on the armature plate (20).

7. Valve according to Claim 6, **characterized in that** elastic damping elements (40) which protrude through the armature plate (20) are arranged in the region of the sealing seat (103) and, on the side facing the sealing seat (103), have a sealing function and, on the side facing the electromagnet (13), have a damping function.

8. Valve according to one of Claims 1 to 4, **characterized in that** the valve element is an armature plate (20') comprising two parts (23, 24), the two parts (23, 24) being formed on each other, connected to each other and provided with a sealing and/or noise-damping element (49) in such a manner that a cavity (25) is formed in the region of the sealing seat (103) under the sealing and/or noise-damping element (49).

9. Valve according to Claim 8, **characterized in that** the sealing and/or damping element has a plurality of hollow-moulded rubber studs (49a) which protrude through at least one of the two parts (23) of the armature plate (20) and, when the valve is opened, strike against a pole plate (14a) of the electromagnet.

10. Valve according to one of Claims 5 to 7, **characterized in that** the armature plate (20") has a pressure-equalizing opening (22) which connects a cavity (27) which is formed on one side of the armature plate and is on the sealing-seat side to a cavity (cavity on the electromagnet side) (28) of the valve, which cavity is formed on the other side of the armature plate (20'') and faces the electromagnet (13).

11. Valve according to Claim 10, **characterized in that** the cavity (28) on the electromagnet side is bounded by an elastic sealing and damping element (43) which is fastened to the magnet core on its side facing the armature plate (20''), and can be deformed by a lifting movement of the armature plate (20'').

12. Valve according to Claim 11, **characterized in that** the sealing and damping element (43) protrudes through the armature plate (20'') and also has a sealing and damping function on its side facing the sealing seat (103).

13. Valve according to one of Claims 1 to 12, **characterized in that** a dirt-collecting device (50) which concentrically surrounds the armature plate (20; 20', 20") and is fixed on the housing is provided, the device retaining dirt particles of a predeterminable size.

14. Valve according to Claim 13, **characterized in that** the dirt-collecting device (50) is of circular ringshaped design and has preferably cylindrical dirt-collecting pins (51) which are offset with respect to one another and protrude in the axial direction.

## Revendications

1. Electrovanne dotée notamment d'au moins une ouverture de vanne formant un logement étanche (103), pour le dégazage du réservoir de véhicules automobiles, et d'un organe de soupape (20, 20', 20") chargé par ressort et actionné par un électroaimant à l'encontre de la force de rappel d'un ressort de rappel (30) afin de verrouiller et de débloquer au moins un logement étanche (103) avec lequel il agit conjointement, un élément d'écoulement (70) étranglant l'écoulement d'un gaz étant disposé en aval de l'organe de soupape,
**caractérisée en ce que**
sa forme est adaptée à la section transversale d'ouverture du logement étanche (103) agissant conjointement avec l'organe de soupape (20, 20', 20") afin de déterminer (mesurer) le coefficient de débit du gaz à travers la section transversale de l'élément d'écoulement (70) alors que l'électrovanne est ouverte de manière à ce que la surface de la section transversale d'ouverture du logement étanche (103) actif soit de 2,5 fois, de préférence 9 fois, plus grande que la surface de la section transversale active de l'élément d'écoulement (70).

2. Soupape selon la revendication 1,
**caractérisée en ce que**
l'élément d'écoulement (70) est un étranglement dont la section transversale est inférieure à celle de l'ouverture du logement étanche (103).

3. Soupape selon la revendication 1,
**caractérisée en ce que**
l'élément d'écoulement (70) est un obturateur dont le diamètre est inférieur à la section transversale d'ouverture du logement étanche (103).

4. Soupape selon la revendication 1,
**caractérisée en ce que**
l'élément d'écoulement (70) est une tuyère de Laval dont la section transversale est inférieure à celle de l'ouverture du logement étanche (103).

5. Soupape selon l'une quelconque des revendications 1 à 4,
**caractérisée en ce que**
l'organe de soupape est une plaque d'ancrage (20, 20', 20") formant une partie du blindage.

6. Soupape selon la revendication 5, **caractérisée en ce que** des éléments d'insonorisation et/ou d'étanchéité (40, 41, 43) élastiques sont disposés sur la plaque d'ancrage (20).

7. Soupape selon la revendication 6,
**caractérisée en ce que**
des éléments amortisseurs élastiques, traversant la plaque d'ancrage (20) et présentant une fonction d'étanchéité sur le côté tourné vers le logement étanche (103) et une fonction d'amortissement sur le côté tourné vers l'électroaimant (13) sont disposés dans la zone du logement étanche (103).

8. Soupape selon l'une quelconque des revendications 1 à 4,
**caractérisée en ce que**
l'organe de soupape est une plaque d'ancrage (20') comprenant deux parties (23, 24) conçues l'une par rapport à l'autre, reliées l'une à l'autre et dotées d'un élément d'insonorisation et/ou d'étanchéité (49) de manière à ce qu'un creux (25) se forme dans la zone du logement étanche (103) sous l'élément d'insonorisation et/ou d'étanchéité (49).

9. Soupape selon la revendication 8,
**caractérisée en ce que**
l'élément d'insonorisation et/ou d'étanchéité comporte une multitude de nopes creuses en caoutchouc (49a) traversant au moins l'une des deux parties (23) de la plaque d'ancrage (20), lesquelles nopes viennent buter à l'ouverture de la soupape contre une plaque d'ancrage (14a) de l'électroaimant.

10. Soupape selon l'une quelconque des revendications 5 à 7,
**caractérisée en ce que**
la plaque d'ancrage (20") comporte une ouverture de compensation de pression (22) qui relie un espace creux (27) côté logement étanche formé sur un côté de la plaque d'ancrage à un espace creux de la soupape (espace creux côté électroaimant) (28) tourné vers l'électroaimant (13) et formé sur l'autre côté de la plaque d'ancrage (20").

11. Soupape selon la revendication 10,
**caractérisée en ce que**
l'espace creux (28) côté électroaimant est limité par un élément d'étanchéité et d'insonorisation élastique (43) fixé sur le tore de ferrite sur son côté tourné vers la plaque d'ancrage (20") et qui peut être déformé par une action de levage de la plaque d'ancrage (20").

12. Soupape selon la revendication 11,
**caractérisée en ce que**
l'élément d'étanchéité et d'insonorisation (43) traverse la plaque d'ancrage (20") et présente également sur son côté tourné vers le logement étanche (103) une fonction d'étanchéité et d'insonorisation.

13. Soupape selon l'une quelconque des revendications 1 à 12,
**caractérisée en ce qu'**
il est prévu un dispositif de panier (50) disposé de manière fixe sur le boîtier, entourant de manière concentrique la plaque d'ancrage (20 ; 20', 20") et retenant les particules de saleté d'une taille prédéfinie.

14. Soupape selon la revendication 13,
**caractérisée en ce que**
le dispositif de panier (50) est conçu de forme circulaire et comporte des chevilles de panier (51) de préférence cylindriques disposées de façon décalées les unes par rapport aux autres, en faisant saillie dans la direction axiale.
